# EUROPEAN PATENT APPLICATION

(11) **EP 4 764 878 A1**
(43) Date of publication of application: **24.06.2026**
(21) Application number: 24870996.6
(22) Date of filing: 27.09.2024
(51) Int. Cl.: G06F 15/78, H04Q 11/00

(54) **COMPUTING DEVICE, COMPUTING SYSTEM, AND OPTICAL MODULE**

(30) Priority: 28.09.2023 CN 202311281913
(71) Applicant: Shanghai Xizhi Technology Co., Ltd., Shanghai 201203 (CN)
(72) Inventor: SHEN, Yichen, Shanghai 201303 (CN); MENG, Huaiyu, Shanghai 201303 (CN); YU, Shanshan, Shanghai 201303 (CN); XU, Yelong, Shanghai 201303 (CN)
(74) Representative: Marks & Clerk LLP
(86) International application number: PCT/CN2024/121853
(87) International publication number: WO 2025/067460

(57) **Abstract**

Provided is a computing device, comprising: a printed circuit board (PCB), a computing chip and one or more optical modules. The computing chip is arranged on the PCB, and comprises one or more input/output high-speed interfaces. Each input/output high-speed interface has one or more input high-speed ports and one or more output high-speed ports. Each output high-speed port performs parallel-to-serial conversion on a parallel signal in the computing chip to output a first electrical signal, and each input high-speed port performs serial-to-parallel conversion on a received second electrical signal serving as a high-speed serial signal. The one or more optical modules are arranged on the PCB, and each port in an electrical input/output interface of each optical module is electrically connected to a corresponding input or output high-speed port in the computing chip by means of wiring in the PCB. Each optical module converts the received first electrical signal into a first optical signal and converts a received second optical signal into the second electrical signal.

## Description

This application claims priority to Chinese Patent Application No. 202311281913.0, filed September 28, 2023, the disclosure of which is incorporated herein by reference in its entirety.

### TECHNICAL FIELD

The present disclosure relates to the field of communication and computing, and in particular, to a computing device, a computing system, and an optical module for the computing device and the computing system.

### BACKGROUND

With the continuous improvement of computing power of AI accelerators through iterative upgrades of various processes and innovations of chip architectures, the interconnection bandwidth between AI accelerators is also increasing. Data from OpenAI, an artificial intelligence research company, shows that the growth rate of the computation amount of artificial intelligence models has far exceeded that of the computing power of computing hardware at present.

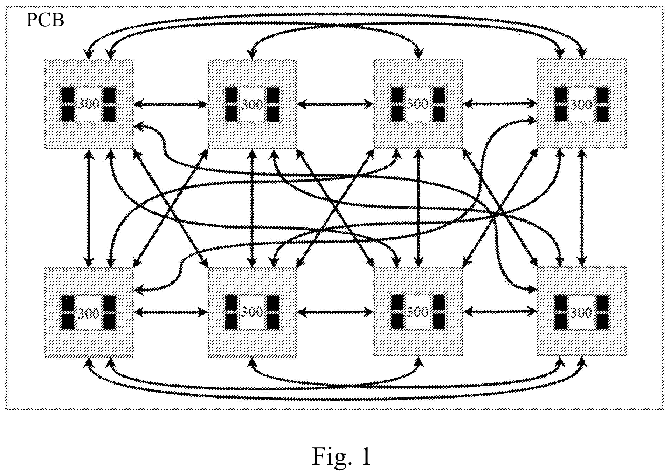

The AI accelerator interconnection network has become the key to improving the overall computing power. The Open Compute Project (OCP) has launched the OCP Accelerator Module (OAM) with a universal form factor, which has been adopted by leading GPU suppliers. The current mainstream communication form between OCP accelerator modules with a universal form factor is as follows: point-to-point interconnection between 8 computing devices is realized through PCB wiring (as shown in Fig. 1). Due to the need to use long PCB wiring, computing devices generally need to adopt SerDes interfaces such as the Common Electrical I/O (CEI) Long Range (LR) interface.

For example, for the full connection in Fig. 1, each SerDes interface needs to access a specific single computing device, which reduces the bandwidth between each pair of computing devices. For instance, in the case of full interconnection of 8 computing chips as shown in Fig. 1, each computing chip needs to be provided with 7 SerDes high-speed interfaces, and the transmission bandwidth of each SerDes high-speed interface is 1/7 of the I/O bandwidth of the computing chip 300. That is, the bandwidth for data transmission from the first computing chip to any other computing chip will be 1/7 of the I/O bandwidth of the computing chip 300, failing to achieve 100% I/O bandwidth transmission. In addition, such a fixed wiring mode is not conducive to flexible bandwidth configuration.

Furthermore, due to the limitation of the transmission distance on the PCB, the computing scale of a single computing node is generally limited to within 8 computing devices.

In addition, since the response of electrical channels attenuates with the increase of signal rate, higher-rate interfaces often involve more complex architectures and circuit designs, thus introducing the cost of delay, consuming more power and occupying a larger chip area, and then limiting the bandwidth of chip's I/O. Besides, a longer metal wiring distance will further increase the loss of the circuit and limit the interconnection distance between AI accelerators.

### SUMMARY

It is beneficial to implement data transmission between various computing devices or AI accelerators by using optical interconnection. Compared with electrical interconnection, the loss of optical channels remains unchanged at different frequencies and the loss value is very small, so optical interconnection can support a longer transmission distance. The combination of optical modules and optical switching can make the bandwidth inside and between computing devices more uniform, which is conducive to the realization of large-scale computing systems.

Therefore, to solve the above problems, the present disclosure proposes various modules, devices and systems that can use optical interconnection to realize large-scale computing.

In one aspect, the present disclosure provides a computing device. The computing device comprises: a PCB; a computing chip arranged on the PCB, wherein the computing chip comprises one or more input/output high-speed interfaces, each input/output high-speed interface has one or more input high-speed ports and one or more output high-speed ports, each output high-speed port performs parallel-to-serial conversion on parallel signals in the computing chip to output a first electrical signal, and each input high-speed port performs serial-to-parallel conversion on a received second electrical signal serving as a high-speed serial signal; and one or more optical modules arranged on the PCB, each optical module comprises an electrical input/output interface and an optical input/output interface, the electrical input/output interface comprises at least one electrical input port and at least one electrical output port, and the optical input/output interface comprises at least one optical input port and at least one optical output port. Each of the at least one electrical input port is electrically connected to a corresponding one of the one or more output high-speed ports by means of wiring in the PCB, each of the at least one electrical output port is electrically connected to a corresponding one of the one or more input high-speed ports by means of wiring in the PCB, each optical module converts the first electrical signal received from each of the at least one electrical input port into a first optical signal output from one of the at least one optical output port, and converts a second optical signal received from each of the at least one optical input port into the second electrical signal and outputs the second electrical signal.

In some embodiments, a number of output high-speed ports of the computing chip is equal to a total number of electrical input ports of the one or more optical modules, and a number of input high-speed ports of the computing chip is equal to a total number of electrical output ports of the one or more optical modules.

In some embodiments, the computing device further comprises at least one high bandwidth memory (HBM) unit, wherein the at least one HBM unit and the computing chip are packaged on a substrate, and the substrate is arranged on the PCB.

In some embodiments, the at least one HBM unit and the computing chip are packaged on the substrate through an interposer.

In some embodiments, the computing chip is an artificial intelligence chip.

In another aspect, the present disclosure provides a computing system. The computing system comprises: a plurality of computing devices as described above; and at least one optical switch. Each computing device is optically interconnected with at least part of the at least one optical switch through a corresponding optical module in each computing device. At least part of the plurality of computing devices are optically interconnected through the at least one optical switch.

In some embodiments, the at least one optical switch can reconfigure optical links between the plurality of computing devices, so that any two computing devices of the plurality of computing devices communicate.

In some embodiments, the at least one optical switch can establish optical links between all optical modules in a first computing device and optical modules in a second computing device, so that the first computing device communicates with the second computing device.

In some embodiments, the at least one optical switch can establish optical links between part of the optical modules in a first computing device and optical modules in a second computing device, and establish optical links between remaining optical modules in the first computing device and optical modules in a third computing device, so that the first computing device communicates with the second computing device and the third computing device simultaneously.

In another aspect, the present disclosure provides an optical module, comprising: an electrical input/output interface; an optical input/output interface; an optical transmitting unit configured to convert an input electrical signal received from the electrical input/output interface into an output optical signal; an optical receiving unit configured to convert an input optical signal received from the optical input/output interface into an output electrical signal; and a control unit configured to control the optical transmitting unit to perform conversion from the input electrical signal to the output optical signal and control the optical receiving unit to perform conversion from the input optical signal to the output electrical signal, wherein the optical module does not perform communication protocol conversion processing on the input electrical signal and the output electrical signal.

In some embodiments, the optical transmitting unit comprises a light emitter and a driver, and wherein the light emitter is a directly modulated laser, and the control unit controls an intensity of an optical signal transmitted by the optical transmitting unit by controlling an electrical signal provided by the driver, so as to form the output optical signal.

In some embodiments, the optical transmitting unit comprises a light emitter and a driver, the light emitter is an externally modulated laser, the optical transmitting unit further comprises a modulator, and the control unit modulates light received from the light emitter by controlling an electrical signal input to the modulator, so as to form the output optical signal.

### BRIEF DESCRIPTION OF DRAWINGS

Fig. 1 is a schematic diagram showing point-to-point full interconnection between a plurality of computing devices implemented through PCB wiring in a traditional computing system.
Figs. 2A-2B are schematic diagrams showing an exemplary configuration of a computing device according to an embodiment of the present disclosure.
Figs. 3A-3B are schematic diagrams showing another exemplary configuration of a computing device according to an embodiment of the present disclosure.
Figs. 4A-4C are schematic diagrams showing an exemplary configuration of a computing system according to an embodiment of the present disclosure.
Figs. 5A-5C are schematic diagrams showing an exemplary configuration of an optical module according to an embodiment of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure should not be construed as being limited to the embodiments set forth herein; on the contrary, these embodiments are provided for a more thorough and complete understanding of the present disclosure. It should be understood that the accompanying drawings and embodiments of the present disclosure are only used for illustrative purposes and are not intended to limit the protection scope of the present disclosure.

It should be noted that each component or assembly described in various embodiments of the present disclosure is only schematic. In some cases, some of the components or assemblies may be omitted, or some of the components or assemblies may be replaced with other components or assemblies with the same or similar functions, and additional components or assemblies may also be added.

In addition, the various components or assemblies described separately or in combination in various embodiments of the present disclosure are only for the convenience of description, which does not mean that they are actually physically separated or combined, nor does it mean that such separation or combination is necessary. Those skilled in the art can split or combine each component or assembly arbitrarily according to actual needs.

Any of the above modifications or combinations falls within the protection scope of the present disclosure without departing from the inventive concept of the present disclosure.

To solve various problems caused by electrical interconnection of computing devices through PCB wiring in the traditional design, the present disclosure proposes a computing device with a novel direct-drive optical module. In the computing device, the optical module is arranged on the same PCB together with the computing chip in an on-board manner, and the direct-drive optical module is directly connected to the high-speed interface of the computing chip without any conversion of the physical layer and the protocol layer.

Since there is no conversion of the protocol layer and the physical layer, the delay required for communication will be greatly reduced, and the transmission bandwidth of the computing chip can be flexibly configured in combination with an optical switch, so that the transmission bandwidth is no longer limited by various protocols.

A retimer does not need to be configured in the novel on-board direct-drive optical module, and the number of ports and channels of the optical module can be matched with the number of ports in the I/O high-speed interface of the computing chip. By directly connecting the computing chip and the on-board direct-drive optical module, the high-speed electrical signal on the computing chip can be directly transmitted to the on-board direct-drive optical module and then undergo electrical-to-optical/optical-to-electrical conversion through components in the on-board direct-drive optical module.

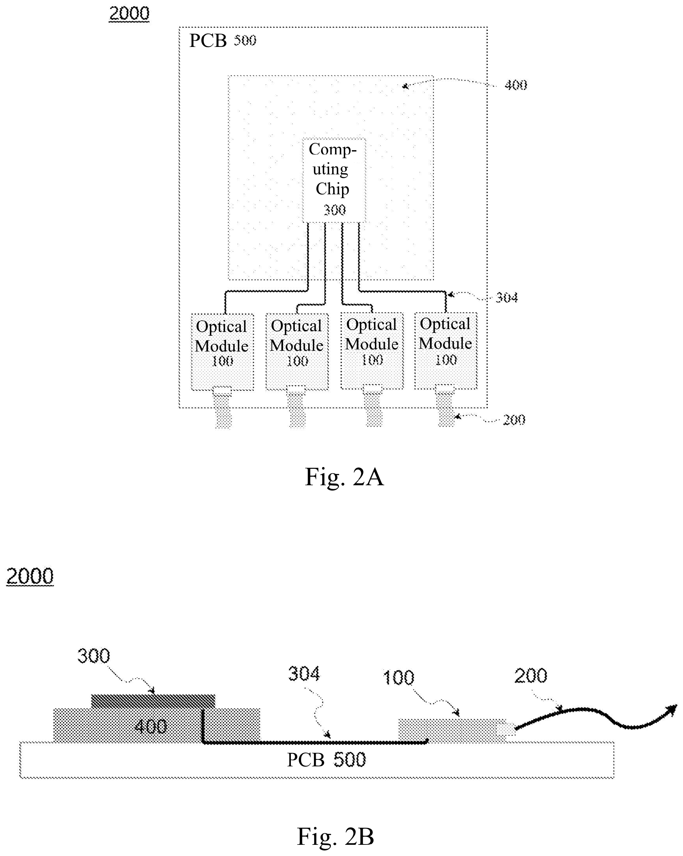

Figs. 2A-2B are schematic diagrams showing an exemplary configuration of a computing device 2000 according to an embodiment of the present disclosure, where Fig. 2A is a top view showing the exemplary configuration of the computing device 2000, and Fig. 2B is a cross-sectional view showing the exemplary configuration of the computing device 2000.

As shown in Fig. 2A or 2B, the computing device 2000 includes one or more optical modules 100 and a computing chip 300. The one or more optical modules 100 and the computing chip 300 are arranged in the same PCB 500.

Each optical module 100 includes an electrical input/output interface and an optical input/output interface. The electrical input/output interface (e.g., the interface connected to the wiring 304) includes at least one electrical input port and at least one electrical output port, or may be collectively referred to as an electrical input/output port. The optical input/output interface (e.g., the interface connected to the optical fiber 200) includes at least one optical input port and at least one optical output port, or may be collectively referred to as an optical input/output port. For the sake of simplicity, further details and the specific number of respective ports of the optical module 100 are not shown in detail in Fig. 2A.

The computing chip 300 and each optical module 100 are arranged on the same PCB 500, and the computing chip 300 includes one or more input/output high-speed interfaces (e.g., long-range SerDes interfaces). Each input/output high-speed interface has one or more input high-speed ports and one or more output high-speed ports. For the sake of simplicity, only 4 input/output high-speed interfaces (e.g., the interfaces connected to the wiring 304) of the computing chip 300 are exemplarily shown in Fig. 2A, and the ports (not shown) in each input/output high-speed interface are respectively connected to the corresponding ports in the electrical input/output interfaces of each optical module 100. Optionally, the computing chip 300 may be mounted on the PCB 500 through a substrate 400.

In some embodiments, the computing chip 300 may be an artificial intelligence chip, including but not limited to a Graphics Processing Unit (GPU), a Neural Processing Unit (NPU), a Tensor Processing Unit (TPU), an Intelligence Processing Unit (IPU), a Deep Learning Processing Unit (DPU), and the like.

It should be noted that the above description that the 4 input/output high-speed interfaces of the computing chip 300 correspond to 4 optical modules is only for the convenience of description. In practical applications, any number of input/output high-speed interfaces may be configured for the computing chip 300 according to specific requirements, and any number of input high-speed ports and output high-speed ports may be configured for each input/output high-speed interface.

In the present disclosure, each output high-speed port of the computing chip 300 performs parallel-to-serial conversion on parallel signals in the computing chip 300 to output a first electrical signal (not shown in the figure), and the first electrical signal is provided to a corresponding electrical input port of the corresponding optical module 100 for optical-to-electrical conversion. The parallel-to-serial conversion operation can be performed by a serializer (a SERializer circuit in the SerDes interface), for example, so that multiple low-speed parallel signals in the computing chip 300 can be converted into high-speed serial signals.

In addition, each input high-speed port of the computing chip 300 performs serial-to-parallel conversion (not shown in the figure) on a second electrical signal serving as a high-speed serial signal received from the optical module 100, so as to convert the high-speed serial signal back into a low-speed parallel signal for use by the computing chip 300. The serial-to-parallel conversion operation can be performed by a deserializer (a DESerializer circuit in the SerDes interface), for example, so that the high-speed serial signal in the computing chip 300 can be converted into a low-speed parallel signal.

Each of the at least one electrical input port of each optical module 100 is electrically connected to one of the one or more output high-speed ports of the computing chip 300 through a wiring 304 in the PCB 500, and each of the at least one electrical output port of each optical module 100 is electrically connected to one of the one or more input high-speed ports of the computing chip 300 through a wiring 304 in the PCB 500.

That is, the high-speed serial signal (e.g., the first electrical signal as described above) output from the electric chip 300 is provided to the electrical input port of the optical module 100 through the wiring 304 in the PCB 500. Similarly, the high-speed serial signal (e.g., the second electrical signal as described above) output from the electrical output port of the optical module 100 is also provided to the electric chip 300 through the wiring 304 in the PCB 500.

It should be noted that the wiring 304 in the PCB 500 is a general term for the electrical connection wiring between the optical module 100 and the computing chip 300, and is not intended to represent a specific wiring.

Functionally, each optical module 100 is used for electrical-to-optical conversion and optical-to-electrical conversion.

For example, the optical module 100 converts the first electrical signal received by each of the at least one electrical input port into a first optical signal output from one of the at least one optical output port. The first electrical signal is a high-speed serial electrical signal directly transmitted from the computing chip 300 to the optical module 100 through the wiring 304 in the PCB 500.

In addition, each optical module 100 also converts a second optical signal received by each of the at least one optical input port into a second electrical signal and outputs the second electrical signal. The second electrical signal is also a high-speed serial electrical signal, which is provided to the computing chip 300 through the wiring 304 in the PCB 500, and then undergoes serial-to-parallel conversion via the input high-speed port of the computing chip 300 to be converted into multiple parallel signals for further calculation or other processing of the computing chip 300.

For example, the optical module 100 may functionally include an optical transmitting unit, an optical receiving unit and a control unit. The optical transmitting unit is used to convert a received electrical signal into an optical signal, and the optical receiving unit is used to convert a received optical signal into an electrical signal. The control unit is configured to control the operations of the optical transmitting unit and the optical receiving unit. For example, the control unit may control the optical transmitting unit to perform conversion from an electrical signal to an optical signal, and control the optical receiving unit to perform conversion from an optical signal to an electrical signal.

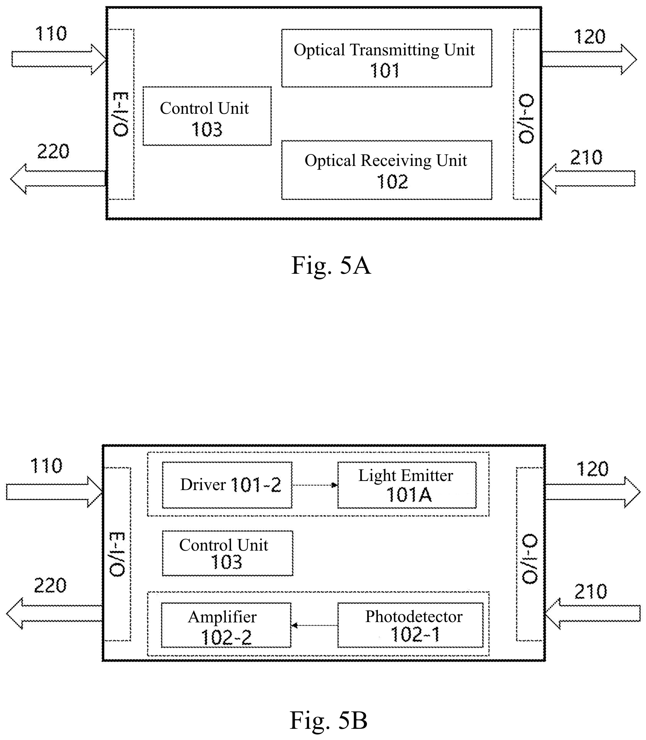

Further details about the optical module 100 will be described later with reference to Figs. 5A-5C.

It should be noted that the input and output signals of each optical module 100 adopt a proprietary protocol of the computing chip 300. That is, neither the computing chip 300 nor each optical module 100 performs communication protocol conversion processing on the input and output electrical signals thereof.

That is, the above-mentioned first electrical signal is an electrical signal obtained by performing parallel-to-serial conversion on an electrical signal conforming to its proprietary protocol directly obtained from the computing processing of the computing chip 300, and is directly output from the output high-speed port of the computing chip 300. The first electrical signal is then provided to the electrical input port of the optical module 100 through the wiring 304 in the PCB 500, and the computing chip 300 can directly output the first electrical signal without any conversion of the physical layer and the protocol layer (e.g., PCIe protocol, Ethernet protocol, etc.).

Similarly, after receiving the first electrical signal at the corresponding electrical input port, the optical module 100 also does not perform any conversion of the physical layer and the protocol layer (e.g., PCIe protocol, Ethernet protocol, etc.) on the first electrical signal, but directly performs electrical-to-optical conversion on the first electrical signal, so as to output the first optical signal obtained by conversion at the corresponding optical output port.

Similarly, after converting the second optical signal received from the optical input port into a second electrical signal, the optical module 100 also does not perform any conversion of the physical layer and the protocol layer on the second electrical signal, but directly outputs the second electrical signal through the electrical output port of the optical module 100, and the directly output second electrical signal is transmitted and provided to the corresponding input high-speed port of the computing chip 300 through the wiring 304 in the PCB 500.

After receiving the second electrical signal at the corresponding input high-speed port, the computing chip 300 also does not perform any conversion of the physical layer and the protocol layer on the second electrical signal except for performing the serial-to-parallel conversion as described above.

In other words, the electrical signals (including the input first electrical signal and the output second electrical signal) in the optical module 100 and the electrical signals input or output by the computing chip 300 (including the output first electrical signal and the input second electrical signal) are all electrical signals conforming to the proprietary protocol of the computing chip, which are not subjected to conversion processing by physical interfaces (e.g., PCIe physical interfaces) of various standard protocols or network cards (e.g., Ethernet network cards) at any end, nor subjected to operations such as various data encapsulation and conversion at the protocol layer at any end. That is, the signals between the optical module 100 and the computing chip 300 are transparent to each other, and the electrical signals provided by the optical module 100 and the computing chip 300 to each other and received by each other are consistent in terms of bandwidth and transmission rate regardless of inherent transmission loss or slight signal distortion.

Through such direct and transparent electrical signal transmission based on PCB wiring, the delay required for data transmission between the computing chip 300 and the optical module 100 will be greatly reduced. In addition, the loss and noise of the PCB wiring 304 can be minimized through reasonable wiring, thereby further ensuring the signal-to-noise ratio requirement of the computing device.

At the same time, due to such direct and transparent electrical signal transmission, it is not necessary to configure a traditional retimer on the optical module 100 to recover the clock, nor is it necessary to configure a traditional analog-to-digital converter (ADC) or digital-to-analog converter (DAC) in the optical module 100 to further convert the input or output electrical signals. In addition, since the computing chips 300 are directly connected through the optical module 100 and the proprietary protocol of the computing chip 300 is adopted, there is no need to transmit control signals, which also greatly simplifies the design of the computing device and the optical module 100.

Furthermore, since no protocol conversion is introduced, the transmission bandwidth of the computing chip 300 can be flexibly configured in combination with an optical switch, and the number of optical modules 100 or the number of signal channels in a single optical module 100 can be designed adaptively according to the transmission bandwidth and the number of channels of the computing chip 300, so that the number of ports or channels in the input/output high-speed interface of the computing chip 300 can be matched (i.e., equal) with the number of electrical ports or channels of one or more optical modules 100 respectively, thereby achieving a more compact package structure.

For example, in some embodiments, the number of output high-speed ports of the computing chip 300 may be equal to the total number of electrical input ports of one or more optical modules 100, and the number of input high-speed ports of the computing chip 300 may be equal to the total number of electrical output ports of one or more optical modules 100.

Assume that each input/output high-speed interface of the computing chip 300 has 8 input high-speed ports and 8 output high-speed ports. If the total input or output bandwidth of the computing chip 300 is 400 Gb/s, it means that the computing chip can transmit 400 G bits of data per second. In addition, assuming that the computing chip 300 is configured with a total of 4 input/output high-speed interfaces, and the total bandwidth of 400 Gb/s will be evenly allocated to the 4 input/output high-speed interfaces.

In this case, 4 optical modules 100 may be configured for the computing chip 300, and each optical module has 8 electrical input ports and 8 electrical output ports. The electrical input ports of the optical modules 100 are connected to the output high-speed ports of the computing chip 300 in a one-to-one correspondence, and the electrical output ports of the optical modules 100 are connected to the input high-speed ports of the computing chip 300 in a one-to-one correspondence. Therefore, each optical module 100 can perform electrical-to-optical conversion or optical-to-electrical conversion on data of 100 Gb/s.

Optionally, assuming that each input/output high-speed interface of the computing chip 300 has 4 input high-speed ports and 4 output high-speed ports, and the computing chip 300 is configured with a total of 8 input/output high-speed interfaces, then the total bandwidth of the computing chip will be evenly allocated to the 8 input/output high-speed interfaces. In this case, 8 optical modules 100 may be configured for the computing chip 300, and each optical module has 4 electrical input ports and 4 electrical output ports.

Optionally, assuming that each input/output high-speed interface of the computing chip 300 has 16 input high-speed ports and 16 output high-speed ports, and the computing chip 300 is configured with a total of 2 input/output high-speed interfaces, then the total bandwidth of the computing chip will be evenly allocated to the 2 input/output high-speed interfaces. In this case, 2 optical modules 100 may be configured for the computing chip 300, and each optical module has 16 electrical input ports and 16 electrical output ports.

In the above examples, the total number of output high-speed ports (8×4) of the computing chip 300 is equal to the total number of electrical input ports (8×4) of the 4 optical modules 100 and they are in one-to-one correspondence. Similarly, the total number of input high-speed ports (8×4) of the computing chip 300 is also equal to the total number of electrical output ports (8×4) of the 4 optical modules 100 and they are in one-to-one correspondence. This enables the number of ports of the optical module 100 to be designed adaptively to match the number of ports of the computing chip, avoiding the existence of some idle or redundant ports, thereby reducing the overall size of the optical module.

It should be noted that the number of input high-speed ports or output high-speed ports of the computing chip 300 mentioned above refers to the number of high-speed ports connected to the optical module 100, which does not mean that the computing chip 300 only includes input or output high-speed ports connected to the optical module 100, and excludes other types of high-speed ports. In practical applications, input or output high-speed ports for other purposes may also exist in the computing chip 300.

The embodiments of the computing device 2000 including the computing chip 300 and one or more optical modules 100 have been described above.

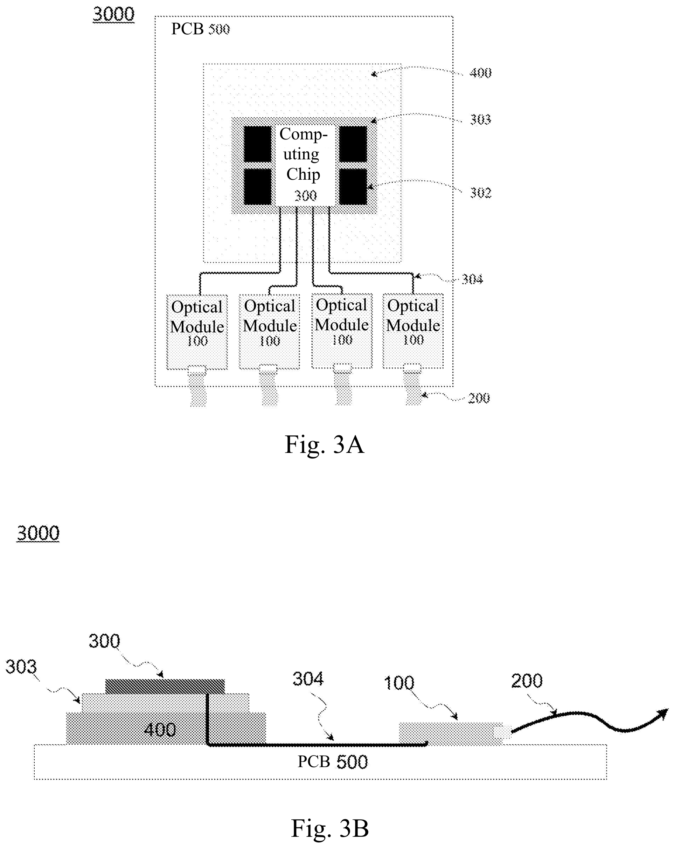

In some embodiments, the computing device proposed in the present disclosure may further include other elements and components. Figs. 3A-3B are schematic diagrams showing an exemplary configuration of a computing device 3000 according to an embodiment of the present disclosure.

As shown in Fig. 3A or 3B, in addition to the computing chip 300 and one or more optical modules 100 shown in Figs. 2A-2B, the computing device 3000 further includes at least one High Bandwidth Memory (HBM) unit 302. For example, the HBM unit can cooperate with the computing chip 300 to perform various cache or storage functions.

In some embodiments, a plurality of HBM units 302 may be arranged on the substrate 400 together with the computing chip 300. Optionally, the plurality of HBM units are arranged on the substrate 400 and located on both sides of the computing chip 300.

Optionally, a plurality of HBM units 302 and the computing chip 300 may also be packaged on the substrate 400 through an interposer 303, and the substrate 400 is arranged on the PCB 500, as shown in Fig. 3B.

The interposer 303 may be an adapter plate with various wiring and conductive structures, which can provide an electrical connection path for the plurality of HBM units 302 and the computing chip 300 arranged thereon.

Other details of the computing device 3000 are similar to those of the computing device 2000 in Figs. 2A-2B, and will not be repeated here.

Based on the various computing devices described above, the present disclosure also proposes a computing system including various computing devices.

Since in the various computing devices described above, the optical signal obtained by electrical-to-optical conversion by the on-board direct-drive optical module can be directly connected to the on-board direct-drive optical module of another computing device through optical fiber transmission, or can be connected to the on-board direct-drive optical module of another computing device through an optical switch port, the reconfiguration of the optical paths between different computing devices can be easily realized.

In such a reconfigurable optical path configuration, since no electrical switch is passed through, the high-speed electrical signal on the computing chip in one computing device can reach the computing chips in other computing devices with the minimum delay.

Based on this configuration mode, full optical switching reconfigurable full connection interconnection between a plurality of computing devices can be realized through a series of on-board direct-drive optical modules and a series of optical switches, avoiding the dilution of transmission bandwidth caused by point-to-point interconnection based on PCB wiring as shown in Fig. 1, and can be used to accelerate artificial intelligence computing.

In addition, since both the on-board direct-drive optical module and the optical switch have the advantages of protocol transparency and low delay, the fully reconfigurable interconnection between every two computing devices can achieve the purposes of long distance, high bandwidth and low delay.

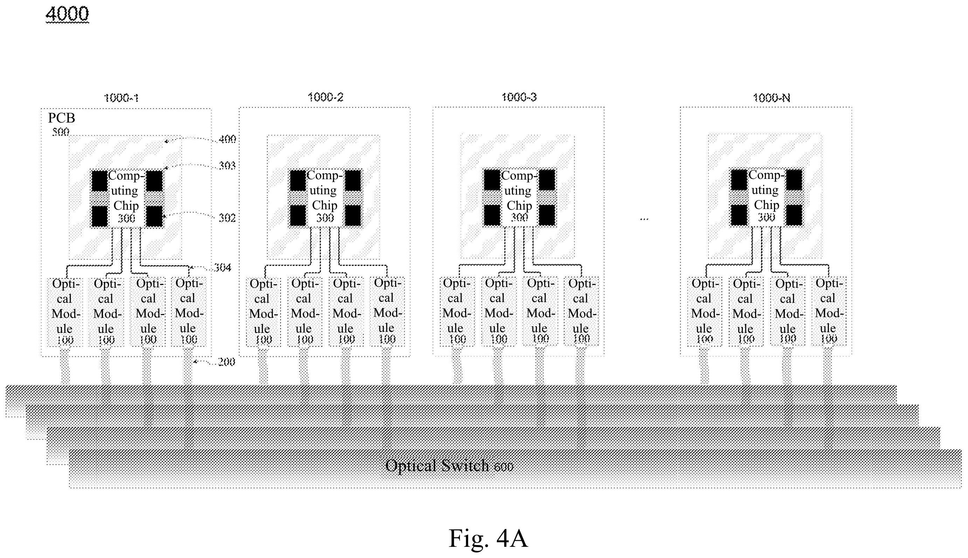

Figs. 4A-4C are schematic diagrams showing an exemplary configuration of a computing system 4000 according to an embodiment of the present disclosure.

As shown in Figs. 4A-4C, the computing system 4000 includes a plurality of computing devices (1000-1, 1000-2, 1000-3, ..., 1000-N) as described above and at least one optical switch 600.

The at least one optical switch 600 can control the optical path based on different physical principles, including piezoelectricity, micro-electromechanics, electro-optics and the like. For example, each optical switch 600 may be composed of a combination of a series of free-space optical components or a series of integrated optical components.

As shown in the figure, each computing device (1000-1, 1000-2, 1000-3, ..., or 1000-N) is optically interconnected with at least part of the at least one optical switch 600 through a corresponding optical module 100 in each computing device (e.g., through an optical fiber 200).

With such a configuration, at least part of the plurality of computing devices can be optically interconnected through the corresponding optical switch.

In some embodiments, the at least one optical switch 600 can reconfigure the optical links between the plurality of computing devices (1000-1, 1000-2, 1000-3, ..., 1000-N), so that any two computing devices of the plurality of computing devices communicate.

For example, each computing device (1000-1, 1000-2, 1000-3, ..., 1000-N) as shown in the figure can rearrange the bandwidth transmission path through optical path switching in the optical switch 600 to realize fully reconfigurable full interconnection between every two computing devices.

Assume that the computing system 4000 includes 8 computing devices (i.e., N=8), and each computing device is provided with 4 high-speed interfaces, such as optical input/output interfaces of 4 optical modules. In this case, the 8 computing devices can perform optical path reconfiguration through one or more (4 in the example of the present invention) optical switches 600, and the data output by the 4 high-speed interfaces of each computing device can be arranged through the corresponding optical switch, so that the data output by the 4 high-speed interfaces are all transmitted to the target computing device. Alternatively, each computing device can receive all output data from the target computing device. Therefore, the transmission bandwidth of each computing device in this architecture can be 100% of the I/O bandwidth of the computing chip 300 in the computing device.

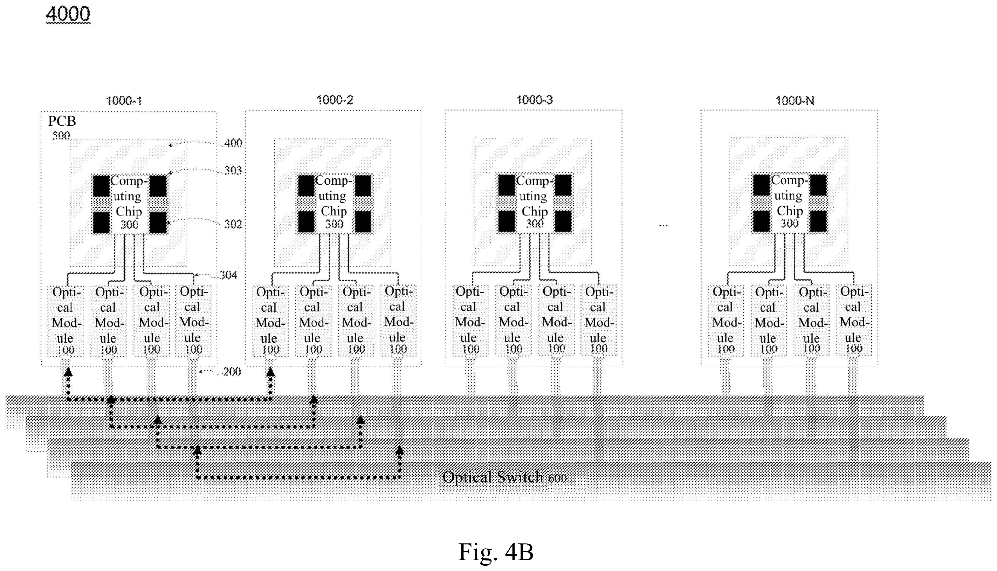

For example, Fig. 4B is a schematic diagram showing full interconnection between a first computing device 1000-1 and a second computing device 1000-2.

As shown in the figure, each computing device includes a computing chip 300 and 4 corresponding optical modules 100. A first optical switch of the at least one optical switch 600 can establish an optical link between a first optical module in the first computing device 1000-1 and a first optical module in the second computing device 1000-2, a second optical switch can establish an optical link between a second optical module in the first computing device 1000-1 and a second optical module in the second computing device 1000-2, a third optical switch can establish an optical link between a third optical module in the first computing device 1000-1 and a third optical module in the second computing device 1000-2, and a fourth optical switch can establish an optical link between a fourth optical module in the first computing device 1000-1 and a fourth optical module in the second computing device 1000-2. The reconfigured optical links between respective optical modules are represented by black dashed arrows in the figure. For example, the establishment of an optical link can be realized by changing the arrangement of optical elements (e.g., changing the angle of a reflector) in each optical switch to realize the establishment of a target optical link.

In this case, optical links are established between the optical input/output interfaces of all optical modules in the first computing device 1000-1 and the optical input/output interfaces of all optical modules in the second computing device 1000-2, so that the first computing device 1000-1 can communicate with the second computing device 1000-2.

Assume that the total input/output bandwidth of the computing chips 300 of the first computing device 1000-1 and the second computing device 1000-2 is 400 Gb/s, then a data bandwidth of 100 Gb/s can be allocated to each optical module 100 through the above configuration. When optical links are established between the optical input/output interfaces of all optical modules in the first computing device 1000-1 and the optical input/output interfaces of all optical modules in the second computing device 1000-2, so that the first computing device 1000-1 can communicate with the second computing device 1000-2, the total communication bandwidth between the first computing device 1000-1 and the second computing device 1000-2 will be 400 Gb/s, i.e., 100% of the I/O bandwidth of the computing chip 300 in the computing device.

As mentioned above, in the case of full interconnection of 8 computing devices by using PCB wiring as shown in Fig. 1, each computing device is provided with 7 high-speed interfaces, and the transmission bandwidth of each high-speed interface is 1/7 of the I/O bandwidth of the computing chip 300 of the computing device. That is, the bandwidth for data transmission from the first computing device to any other computing device is 1/7 of the I/O bandwidth of the computing chip 300.

In contrast, the optical interconnection solution proposed in the present disclosure can realize that the bandwidth for data transmission from the first computing device to any other computing device reaches 100% of the I/O bandwidth of the computing chip 300.

Fig. 4B is an example of full interconnection between the first computing device 1000-1 and the second computing device 1000-2 to realize 100% bandwidth communication. In some other examples, full interconnection is not required between the first computing device 1000-1 and the second computing device 1000-2, but partial interconnection can be adopted to realize more flexible bandwidth configuration.

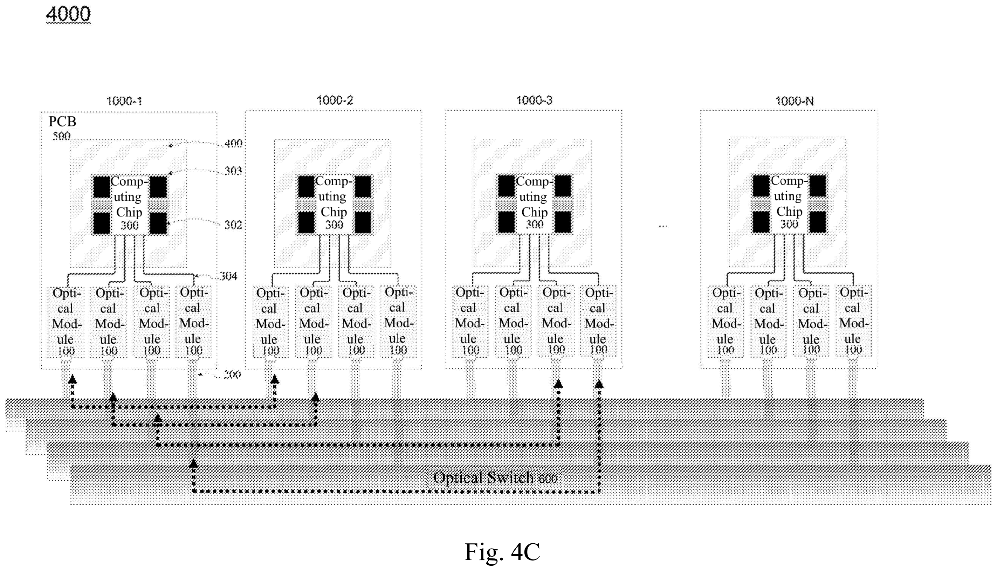

For example, Fig. 4C is a schematic diagram showing partial interconnection between the first computing device 1000-1 and the second computing device 1000-2.

As shown in the figure, similar to Fig. 4A, each computing device includes a computing chip 300 and 4 corresponding optical modules 100. A first optical switch of the at least one optical switch 600 establishes an optical link between a first optical module in the first computing device 1000-1 and a first optical module in the second computing device 1000-2, and a second optical switch establishes an optical link between a second optical module in the first computing device 1000-1 and a second optical module in the second computing device 1000-2, as shown by black dashed arrows.

Different from Fig. 4B, in Fig. 4C, a third optical switch establishes an optical link between a third optical module in the first computing device 1000-1 and a third optical module in a third computing device 1000-3, instead of establishing an optical link between the third optical module in the first computing device 1000-1 and the third optical module in the second computing device 1000-2, and a fourth optical switch establishes an optical link between a fourth optical module in the first computing device 1000-1 and a fourth optical module in the third computing device 1000-3, instead of establishing an optical link between the fourth optical module in the first computing device 1000-1 and the fourth optical module in the second computing device 1000-2.

In this way, the first computing device 1000-1 and the second computing device 1000-2 can communicate only through part of the bandwidth, for example, through the part of the bandwidth allocated to the first and second optical modules, which accounts for 50% of the I/O bandwidth of the computing chip 300, for example. At the same time, the first computing device 1000-1 and the third computing device 1000-3 can communicate through the remaining part of the bandwidth, for example, through the part of the bandwidth allocated to the third and fourth optical modules, which is also 50% of the I/O bandwidth of the computing chip 300.

Such a flexible reconfiguration mode enables the first computing device 1000-1 to communicate with the second computing device 1000-2 and the third computing device 1000-3 simultaneously, increasing the flexibility and freedom of the computing system.

It should be noted that although the computing device 3000 similar to that in Figs. 3A-3B is shown in Figs. 4A-4C, this is only exemplary. The computing device 2000 described in Figs. 2A-2B and various modifications thereof are also applicable to the computing system described in Figs. 4A-4C.

In addition, the number of optical modules in the computing device, the number of computing devices in the computing system, and the number of optical switches in the computing system shown in the above examples are also only exemplary and not limiting.

In the computing system of Figs. 4A-4C, the computing chips are interconnected through the above optical modules and optical switches, which breaks through the distance limitation of PCB wiring interconnection and the number limitation of computing chips, so that the number of interconnected computing chips in the computing system can be arbitrarily configured as required.

The optical module of the present disclosure can directly convert the electrical signal output by the computing chip into an optical signal, and can also directly transmit the electrical signal obtained by conversion to the computing chip without protocol conversion, which greatly reduces the system delay. Since the entire process in which the electrical signal obtained through processing by the computing chip is transmitted to the optical module for electrical-to-optical conversion, then transmitted to another optical module for optical-to-electrical conversion, and the obtained electrical signal is transmitted to another computing chip for signal processing does not require protocol conversion, there is no need to transmit control signals in the point-to-point communication process between different computing chips, which greatly simplifies the design of the computing system.

Those skilled in the art can easily conceive of other similar arrangements without departing from the design concept of the present disclosure. For example, more (e.g., 5, 6 or more) or fewer (e.g., 1, 2 or 3) optical modules can be arranged in the computing device, and more (e.g., 9, 10 or more) or fewer (e.g., 7, 6 or fewer) computing devices or optical switches can be arranged in the computing system.

Embodiments of the optical module 100 used in the computing device or the computing system as described above will be described below with reference to Figs. 5A to 5C.

Fig. 5A is a schematic diagram showing the overall configuration of an optical module 100 according to an embodiment of the present disclosure.

As shown in Fig. 5A, the optical module 100 functionally includes an electrical input/output interface E-I/O, an optical input/output interface O-I/O, an optical transmitting unit 101, an optical receiving unit 102 and a control unit 103.

The optical transmitting unit 101, also referred to as a TX unit, is configured to convert an input electrical signal 110 received from the electrical input/output interface E-I/O into an output optical signal 120, i.e., perform electrical-to-optical conversion (also referred to as E-O conversion).

The optical receiving unit 102, also referred to as an RX unit, is configured to convert an input optical signal 210 received from the optical input/output interface O-I/O into an output electrical signal 220, i.e., perform optical-to-electrical conversion (also referred to as O-E conversion).

The control unit 103 may be a controller or a microcontroller in any form, configured to control the optical transmitting unit 101 to perform E-O conversion from the input electrical signal 110 to the output optical signal 120. Similarly, the control unit 103 may also control the optical receiving unit 102 to perform O-E conversion from the input optical signal 210 to the output electrical signal 220.

As mentioned above, the optical module proposed in the present disclosure does not perform communication protocol conversion processing on the input electrical signal and the output electrical signal.

That is, after receiving the input electrical signal 110 at the electrical input/output interface E-I/O, the optical module 100 does not perform any conversion of the physical layer and the protocol layer on the input electrical signal 110, but directly performs electrical-to-optical conversion on the input electrical signal 110, so as to output the output optical signal 120 obtained by conversion at the corresponding optical input/output interface O-I/O.

Similarly, after converting the input optical signal 210 received from the optical input/output interface O-I/O into an output electrical signal 220, the optical module 100 also does not perform any conversion of the physical layer and the protocol layer on the output electrical signal 220, but directly outputs the output electrical signal 220 through the electrical input/output interface E-I/O of the optical module 100.

For example, the optical module 100 does not include physical interfaces of any standard protocols (e.g., a PCIe physical interface), nor does it perform various operations such as protocol layer data encapsulation/decapsulation and conversion on the input electrical signal 110 or the output electrical signal 220, but only performs electrical-to-optical conversion or optical-to-electrical conversion on the signals.

In some embodiments, in the E-O conversion direction, the input electrical signal 110 may be an electrical signal from an external device, adopting a proprietary protocol of the external device without protocol conversion, for example, an electrical signal from any one of external computing devices, storage devices, communication devices and the like. In addition, the electrical signal 220 output from the optical module 100 may be provided to the same external device.

Converting the received input electrical signal 110 into the output optical signal 120 as described above actually means loading the information carried on the input electrical signal 110 onto the output optical signal 120 in a modulation manner.

Correspondingly, in the O-E conversion direction, the input optical signal 210 may also be an optical signal from an external device. In addition, the optical signal 120 output from the optical module 100 may also be provided to the same external device.

The external device may provide the input optical signal 210 to the optical module 100 through an optical fiber, for example, and the input optical signal 210 may carry specific information (e.g., "information A"). That is, the input optical signal 210 may carry "information A" through a certain modulation technology. The optical receiving unit 102 in the optical module 100 performs O-E conversion on such an optical signal carrying "information A", so as to obtain an electrical signal carrying the same "information A". Such an output electrical signal can then be provided to an external device as described above, for example, a computing chip as described above.

Some examples of the internal configuration of the optical module without communication protocol conversion proposed in the present disclosure will be described below with reference to Figs. 5B to 5C.

Fig. 5B is a schematic structural diagram of an example of an optical module 100 according to an embodiment of the present disclosure. It should be noted that the optical module 100 shown in Fig. 5B can be regarded as a more detailed embodiment of the optical module 100 shown in Fig. 5A.

For example, the optical transmitting unit 101 as shown in Fig. 5A may include a light emitter 101A and a driver 101-2 as shown in Fig. 5B, where the driver 101-2 is configured to drive the light emitter 101A to emit an optical signal as the output optical signal 120.

In addition, the optical receiving unit 102 as shown in Fig. 5A may include a photodetector 102-1 and an amplifier 102-2 as shown in Fig. 5B, where the photodetector 102-1 can convert the detected input optical signal 210 into an electrical signal, and the amplifier 102-2 can then amplify the converted electrical signal and output the amplified electrical signal as the output electrical signal 220.

The light emitter 101A shown in Fig. 5B is a "directly modulated" light emitter, which may be a directly modulated Vertical-Cavity Surface-Emitting Laser (VCSEL) or a Distributed Feedback (DFB) laser, for example.

The so-called "direct modulation" means that the control unit 103 can control the electrical signal provided by the driver 101-2 to the light emitter 101A according to the input electrical signal 110, so as to control an intensity of the optical signal emitted by the light emitter 101A without using other modulators to load or modulate the information in the electrical signal onto the emitted optical signal.

For example, the control unit 103 can directly control the magnitude of the current provided by the driver 101-2 according to the amplitude of the logic levels "1" and "0" of the input electrical signal 110, so that the intensity of the light emitted by the light emitter 101A can have a linear or substantially linear relationship with the amplitude of the input current.

Optionally, the light emitter in the optical module of the present disclosure may also be an "externally modulated" light emitter. As the name implies, an "externally modulated" light emitter means that the light emitter itself cannot modulate light and needs to rely on an external device to modulate light.

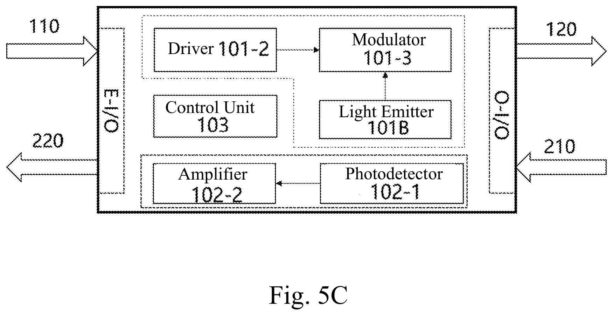

Fig. 5C is a schematic diagram of another example of an optical module 100 according to an embodiment of the present disclosure. In Fig. 5C, the light emitter 101B is an externally modulated laser, for example, and in addition to the driver 101-2 and the light emitter 101B, the optical transmitting unit 101 as shown in Fig. 5A further needs to include a modulator 101-3 additionally.

In this case, the light emitter 101B will be in a stable light-emitting state and emit light with a consistent intensity. The light emitted by the light emitter 101B will be provided to the modulator 101-3, and the control unit 103 can control the electrical signal input to the modulator 101-3 through the driver 101-2, so as to modulate the amplitude, phase and other characteristics of the light received from the light emitter 101B, so as to modulate the information carried in the input electrical signal 110 onto the light to form the output optical signal 120.

Typical examples of the modulator 101-3 include integrated photonic modulators such as silicon-based, indium phosphide, thin-film lithium niobate or polymer modulators, and may be micro-ring modulators, Mach-Zehnder modulators or electro-absorption modulators in structure.

For example, in the case where the modulator 101-3 is an electro-absorption modulator, the control unit 103 can control the on/off of the modulator 101-3 through the driver 101-2 to make it absorb or not absorb light, so as to absorb the light emitted by the light emitter 101B (e.g., corresponding to an output logic "0") or not absorb the light emitted by the light emitter 101B (e.g., corresponding to an output logic "1"). Through this method, the intensity, phase and the like of the final output light can be controlled, so that information can be modulated or loaded onto the output optical signal 120.

It should be noted that the modulation formats of the logic levels "1" and "0" of the input electrical signal 110 mentioned above are only exemplary and not limiting. In practice, the input electrical signal 110 may have any suitable modulation format.

In addition, the driver 101-2, the photodetector 102-1 and the amplifier 102-2 shown in Figs. 5B-5C can be implemented by any suitable components in the art.

For example, the driver 101-2 can be realized by a circuit composed of various electronic components such as transistors, resistors and capacitors. For example, the photodetector 102-1 can be various types of photodiodes with various sensitivities, such as a photomultiplier tube (PMT), an avalanche photodiode (APD), a silicon photomultiplier (SiPM), and the like. In addition, the amplifier 102-2 can be a traditional transimpedance amplifier (TIA), or various types of amplifiers based on similar principles or other principles, which will not be elaborated here.

In addition, it should be noted that the optical module without communication protocol conversion proposed in the present disclosure does not include a traditional retimer, a traditional analog-to-digital converter (ADC) or a digital-to-analog converter (DAC). This is because the optical module proposed in the present disclosure only performs transparent electrical-to-optical conversion on the input electrical signal and only performs transparent optical-to-electrical conversion on the input optical signal. The so-called transparency means that there is no need to perform clock recovery processing on the signal before and after conversion, nor is there a need to perform digital-to-analog or analog-to-digital conversion processing on the signal before and after conversion, that is, the input signal and the output signal are only different in form (electrical signal form or optical signal form), and no other conversion processing is performed to adapt to the target protocol or format.

The optical module 100 proposed in the present disclosure does not include a processing channel for low-speed sideband control signals, that is, only a conversion channel for high-speed data signals is provided, and no conversion channel corresponding to low-speed sideband control signals is included, which also greatly simplifies the design of the optical module 100.

Various features of the optical module 100 described above with respect to the computing device and the computing system in Figs. 2A to 4C are also applicable to the optical module in Figs. 5A to 5C.

In the above description, the embodiments of the present disclosure have been described with reference to the accompanying drawings. It should be understood that the above embodiments are only illustrative, and those skilled in the art should understand that the combinations of the constituent elements and processes of the embodiments can be modified in various ways, and such modifications also fall within the scope of the present disclosure.

## Claims

1. A computing device, comprising:
a PCB;
a computing chip arranged on the PCB, wherein the computing chip comprises one or more input/output high-speed interfaces, each input/output high-speed interface has one or more input high-speed ports and one or more output high-speed ports, each output high-speed port performs parallel-to-serial conversion on parallel signals in the computing chip to output a first electrical signal, and each input high-speed port performs serial-to-parallel conversion on a received second electrical signal serving as a high-speed serial signal; and
one or more optical modules arranged on the PCB, wherein each optical module comprises an electrical input/output interface and an optical input/output interface, the electrical input/output interface comprises at least one electrical input port and at least one electrical output port, and the optical input/output interface comprises at least one optical input port and at least one optical output port, wherein
each of the at least one electrical input port is electrically connected to a corresponding one of the one or more output high-speed ports by means of wiring in the PCB,
each of the at least one electrical output port is electrically connected to a corresponding one of the one or more input high-speed ports by means of wiring in the PCB,
each optical module converts the first electrical signal received from each of the at least one electrical input port into a first optical signal output from one of the at least one optical output port, and converts a second optical signal received from each of the at least one optical input port into the second electrical signal and outputs the second electrical signal.

2. The computing device of claim 1, wherein a number of output high-speed ports of the computing chip is equal to a total number of electrical input ports of the one or more optical modules, and a number of input high-speed ports of the computing chip is equal to a total number of electrical output ports of the one or more optical modules.

3. The computing device of claim 1 or 2, further comprising at least one high bandwidth memory (HBM) unit, wherein the at least one HBM unit and the computing chip are packaged on a substrate, and the substrate is arranged on the PCB.

4. The computing device of claim 3, wherein the at least one HBM unit and the computing chip are packaged on the substrate through an interposer.

5. The computing device of claim 1, wherein the computing chip is an artificial intelligence chip.

6. A computing system, comprising:
a plurality of computing devices of any one of claims 1 to 5; and
at least one optical switch,
wherein each computing device is optically interconnected with at least part of the at least one optical switch through a corresponding optical module in each computing device; and
at least part of the plurality of computing devices are optically interconnected with each other through the at least one optical switch.

7. The computing system of claim 6, wherein the at least one optical switch is capable of reconfiguring optical links between the plurality of computing devices, so that any two computing devices of the plurality of computing devices communicate.

8. The computing system of claim 6 or 7, wherein the at least one optical switch is capable of establishing optical links between all optical modules in a first computing device and optical modules in a second computing device, so that the first computing device communicates with the second computing device.

9. The computing system of claim 6 or 7, wherein the at least one optical switch is capable of establishing optical links between part of the optical modules in a first computing device and optical modules in a second computing device, and establishing optical links between remaining optical modules in the first computing device and optical modules in a third computing device, so that the first computing device communicates with the second computing device and the third computing device simultaneously.

10. An optical module, comprising:
an electrical input/output interface;
an optical input/output interface;
an optical transmitting unit configured to convert an input electrical signal received from the electrical input/output interface into an output optical signal;
an optical receiving unit configured to convert an input optical signal received from the optical input/output interface into an output electrical signal; and
a control unit configured to control the optical transmitting unit to perform conversion from the input electrical signal to the output optical signal and control the optical receiving unit to perform conversion from the input optical signal to the output electrical signal,
wherein the optical module does not perform communication protocol conversion processing on the input electrical signal and the output electrical signal.

11. The optical module of claim 10, wherein the optical transmitting unit comprises a light emitter and a driver, and
the light emitter is a directly modulated laser, and the control unit controls an intensity of an optical signal transmitted by the optical transmitting unit by controlling an electrical signal provided by the driver, so as to form the output optical signal.

12. The optical module of claim 10, wherein the optical transmitting unit comprises a light emitter and a driver, and
the light emitter is an externally modulated laser, and the optical transmitting unit further comprises a modulator, and
the control unit modulates light received from the light emitter by controlling an electrical signal input to the modulator, so as to form the output optical signal.
